# EUROPÄISCHE PATENTSCHRIFT

(11) **EP 3 609 741 B1**
(45) Veröffentlichungstag und Bekanntmachung des Hinweises auf die Patenterteilung: **02.06.2021**
(21) Anmeldenummer: 18784334.7
(22) Anmeldetag: 11.04.2018
(51) Int. Cl.: B60Q 1/48

(54) **FAHRZEUGSCHEINWERFER SOWIE VERFAHREN ZUR UNTERSTÜTZUNG EINES EINPARKVORGANGES**
VEHICLE HEADLIGHT AND METHOD FOR ASSISTING A PARKING MANOEUVRE
PHARE DE VÉHICULE ET PROCÉDÉ D'ASSISTANCE À UN PROCESSUS DE STATIONNEMENT

(30) Priorität: 11.04.2017 AT 502982017
(43) Veröffentlichungstag der Anmeldung: 19.02.2020
(73) Patentinhaber: ZKW Group GmbH, 3250 Wieselburg (AT)
(72) Erfinder: HARTMANN, Peter, 3392 Schönbühel an der Donau (AT); REINPRECHT, Markus, 3384 Pielachhäuser (AT); PÜRSTINGER, Josef, 4540 Bad Hall (AT); REISINGER, Bettina, 3300 Amstetten (AT); HAUER, Clemens, 3261 Steinakirchen am Forst (AT); MAYER, Matthias, 3240 Mank (AT); KALOUSEK, Christian, 3052 Neustift-Innermanzing (AT); LAHMER, Martin, 3662 Münichreith (AT)
(74) Vertreter: Patentanwaltskanzlei Matschnig & Forsthuber OG
(86) Internationale Anmeldenummer: PCT/AT2018/000018
(87) Internationale Veröffentlichungsnummer: WO 2018/187823

(56) Entgegenhaltungen:
- EP-A1- 2 896 937
- WO-A1-2011/014482
- WO-A1-2016/114048
- DE-A1-102006 056 966
- DE-A1-102011 119 923
- DE-A1-102013 215 980
- DE-U1-202016 105 624
- JP-A- 2008 143 505

## Beschreibung

Die Erfindung betrifft einen Fahrzeugscheinwerfer. Weiters betrifft die Erfindung ein Verfahren zur Unterstützung eines Einparkvorganges eines Fahrzeuges in eine Parklücke mittels einer Bodenprojektion durch einen Fahrzeugscheinwerfer.

Systeme, die bei Einparkvorgängen von Fahrzeugen in Parklücken unterstützend eingreifen oder mitwirken, sind aus dem Stand der Technik bekannt. In der Automobilindustrie werden hierbei typischerweise Systeme eingesetzt, die über Kameras und/oder Abstandssensoren verfügen, die an diversen Bereichen eines Fahrzeuges, insbesondere an den Stoßfängern oder im Bereich des Kühlergrills, angeordnet sind.

Der Fahrzeuglenker kann durch solche Systeme auf unterschiedliche Weise während eines Einparkvorganges unterstützt werden. Die Unterstützungsmaßnahmen reichen von Tonsignalen, optischen Signalen auf einem Bildschirm, optischen Signalen auf einem Head-Display bis hin zu Automatismen, die den Einparkvorgang vollständig übernehmen können.

Solche Systeme sind komplex und unter Umständen fehleranfällig, da die darin verwendeten Komponenten im Allgemeinen direkten Umwelteinflüssen ausgesetzt sind und beispielsweise aufgrund von Verschmutzung ausfallen können, oder, insbesondere im Falle einer Anordnung im Stoßfänger, durch mechanische Einwirkungen beschädigt werden können. Die Verwendung von Tonsignalen wird typischerweise lediglich dazu eingesetzt, Abstände zu signalisieren. Die Verwendung von optischen Signalen im Innenbereich eines Fahrzeuges erlaubt zwar die Anzeige von Lenkinformationen, allerdings hat die Anzeige im Innenbereichs eines Fahrzeuges zur Folge, dass die Aufmerksamkeit des Fahrzeuglenkers auf die innenliegende Anzeige gelenkt wird, wodurch der außerhalb des Fahrzeug liegende Bereich außer Acht geraten kann. Dies ist insbesondere in Situationen problematisch, in denen sich Dritte, beispielsweise Fußgänger oder Fahrradfahrer, relativ zu dem Fahrzeug bewegen.

DE 10 2011 119923 A1 betrifft ein Beleuchtungssystem zur Projektion von zielgerichteten optischen Orientierungshilfen. JP 2008 143505 A betrifft eine Beleuchtungssteuerung. EP 2 896 937 A1 betrifft ein Straßenbeleuchtungssystem für Fahrzeuge. Die DE 10 2013 215980 A1 betrifft eine optische Fahrerunterstützung in einem Engstellenbereich.

Es ist daher eine Aufgabe der Erfindung ein System zu schaffen, das die obig genannten Nachteile überwindet, robust ist und dazu eingesetzt werden kann, den Fahrzeuglenker bei der Durchführung eines Einparkmanövers, insbesondere bei der Auswahl einer geeigneten Parklücke, wirksam zu unterstützen.

Diese Aufgabe wird mit einem Fahrzeugscheinwerfer gelöst, der erfindungsgemäß
- eine hochauflösende Leuchtvorrichtung zur Projektion unterschiedlicher Lichtverteilungen auf einen vor einem Fahrzeug liegenden Fahrbahnbereich, wobei die hochauflösende Leuchtvorrichtung dazu geeignet ist, unterschiedliche Lichtverteilungen in einer Auflösung von 1°, bevorzugt weniger als 0,5°, auf eine Fahrbahn zu projizieren,
- eine Umgebungserfassungseinrichtung zur Erfassung zumindest einer in der Umgebung des Fahrzeugs befindlichen Parklücke, wobei sich die Parklücke zum Zeitpunkt des Erfassens bevorzugt in der Umgebung des vor dem Fahrzeug liegenden Fahrbahnbereichs befindet, und
- eine Steuerungseinrichtung zur dynamischen Ansteuerung der Leuchtvorrichtung umfasst,
wobei die Umgebungserfassungseinrichtung dazu eingerichtet ist, zu einer erfassten Parklücke korrespondierende Informationen an die Steuerungseinrichtung auszugeben, wobei die Steuerungseinrichtung dazu eingerichtet ist, im Falle der Erfassung einer Parklücke durch die Umgebungserfassungseinrichtung unter Berücksichtigung zumindest der die Parklücke betreffenden Informationen der Umgebungserfassungseinrichtung die Leuchtvorrichtung dergestalt anzusteuern, dass die Leuchtvorrichtung zumindest eine vorgebbare, zumindest die Fahrzeuglänge repräsentierende Bodenprojektion auf den vor dem Fahrzeug liegenden Fahrbahnbereich projiziert, wobei die Steuerungseinrichtung dazu eingerichtet ist, unter Berücksichtigung der Position und Orientierung des Fahrzeuges in Bezug auf die Parklücke sowie von einer erfassten Lage und Abmessungen der Parklücke, zumindest ein Sollparkmanöver zu berechnen oder zu erfassen, und die Leuchtvorrichtung dergestalt anzusteuern, dass in Abhängigkeit von einem Vergleich der durch die Umgebungserfassungseinrichtung erfassten Position und Orientierung des Fahrzeuges in Bezug auf die erfasste Parklücke und des zumindest einen Sollparkmanövers, Lenkinstruktionen repräsentierende Symbole auf Fahrbahn projiziert werden, wobei die Leuchtvorrichtung zur Projektion unterschiedlicher Lichtverteilungen zumindest eine Laserlichtquelle mit einem der Laserlichtquelle nachgeordneten Lichtkonversionselement zur Wandlung des Laserlichtes in sichtbares Licht umfasst, wobei das durch die Laserlichtquelle abgestrahlte Licht auf zumindest eine Lichtumlenkeinheit gelenkt ist, wobei die Lichtumlenkeinheit dazu eingerichtet ist, das von der Laserlichtquelle abgestrahlte Licht dergestalt in unterschiedliche vorgebbare Richtungen auf das Lichtkonversionselement zu lenken, dass voneinander unterschiedliche Lichtverteilungen erzeugbar sind, wobei die Lichtumlenkeinheit zu diesem Zweck zumindest einen um eine oder zwei Achsen schwenkbaren Mikrospiegel, beispielsweise in Form eines MEMS, umfasst. Zudem kann vorgesehen sein, dass die hochauflösende Leuchtvorrichtung zusätzlich zur Projektion unterschiedlicher Lichtverteilungen auf andere in der Umgebung des Fahrzeugs liegende Fahrbahnbereiche eingerichtet ist, die nicht nur vor dem Fahrzeug liegen, oder dass zu diesem Zweck eine zusätzliche hochauflösende Leuchtvorrichtung vorgesehen ist.

Die Nutzung eines Fahrzeugscheinwerfers mit einer hochauflösenden Leuchtvorrichtung zur Unterstützung eines Einparkvorganges hat den besonderen Vorteil, dass bei dieser erfindungsgemäßen Anordnung die den Fahrzeuglenker unterstützenden Signale direkt auf die Fahrbahn projiziert werden können, sodass die volle Aufmerksamkeit des Fahrzeuglenkers weiterhin auf die Fahrbahn gerichtet ist. Zudem ist durch die Unterbringung der Umgebungserfassungseinrichtung und der Steuereinrichtung ein Aufbau geschaffen, der besonders kompakt und robust ist und in einfacher Weise ohne Anpassung der verbleibenden Fahrzeugbereiche in ein Fahrzeug integriert werden kann. Durch die Projektion zumindest einer zumindest die Fahrzeuglänge repräsentierende Bodenprojektion auf den vor dem Fahrzeug liegenden Fahrbahnbereich kann der Fahrzeuglenker aufgrund eines Vergleichs der Bodenprojektion mit der Parklücke vorab abschätzen, ob die Parklücke für einen Einparkvorgang ausreichend groß ist.

Bei der hochauflösenden Leuchtvorrichtung kann es sich prinzipiell um jede dem Fachmann bekannte Leuchtvorrichtung handeln, die dazu geeignet ist unterschiedliche Lichtverteilungen in einer Auflösung von 1°, bevorzugt weniger als 0,5°, auf eine Fahrbahn zu projizieren. Bei den Lichtverteilungen kann es sich beispielsweise um eine Abblendlicht- oder eine Fernlichtverteilung, aber auch eine zu einer Bodenprojektion korrespondierende Lichtverteilung handeln.

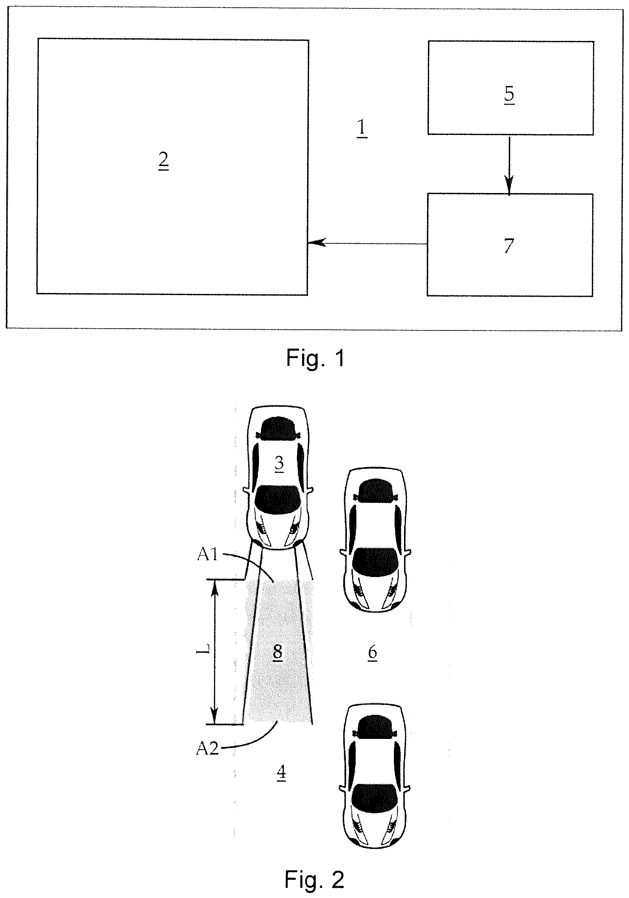

Insbesondere kann vorgesehen sein, dass die zumindest die Fahrzeuglänge repräsentierende Bodenprojektion zumindest einen aufgehellten Anfangsabschnitt und einen aufgehellten Endabschnitt aufweist, wobei der Abstand von einem äußeren Ende des Anfangsabschnitts hin zu einem äußeren Ende des Endabschnitts die Fahrzeuglänge repräsentiert. Bestehen der aufgehellte Anfangsabschnitt und Endabschnitt beispielsweise jeweils aus zueinander parallel orientierten Streifen, wie in Fig. 2 bis 4 gezeigt ist, so ist der besagte Abstand durch den Abstand der äußeren voneinander abgewandten Enden der Streifen gegeben. Die Aufhellung der besagten Abschnitte erfolgt durch gezielte Abstrahlung von Licht durch die Leuchtvorrichtung, wobei die Lichtabstrahlung dergestalt gewählt ist, dass die Lichtintensität in den aufgehellten Bereich aus Sicht des Fahrzeuglenkers sichtbar größer ist als die des umgebenden Bereichs, insbesondere die Lichtintensität des unmittelbar umgebenden Bereichs um zumindest 20% übersteigt, bevorzugt um 50% oder - im Falle von Dunkelheit - auch weit über 500% übersteigt.

Zudem kann vorgesehen sein, dass ebenso der Bereich zwischen Anfangsabschnitt und Endabschnitt dergestalt aufgehellt ist, dass die zumindest die Fahrzeuglänge repräsentierende Bodenprojektion eine im Wesentlichen rechteckige Form aufweist, wobei die Länge des Rechteckes zwischen 100% und 150% des Fahrzeugs beträgt. Diese Längenangaben beziehen sich auf eine horizontale Fahrbahn und horizontale Fahrzeug- bzw. Fahrzeugscheinwerferlage.

Insbesondere kann vorgesehen sein, dass die Breite des Rechteckes der Breite des Fahrzeuges entspricht. Dadurch kann der Fahrzeuglenker zudem die Breite der Parklücke mit der Breite des Fahrzeuges auf einfache Weise vergleichen.

Auch kann es günstig sein, wenn die Steuerungseinrichtung eine Schnittstelle aufweist, mittels der der Abstand von einem äußeren Ende des Anfangsabschnitts hin zu einem äußeren Ende des Endabschnitts durch den Fahrzeuglenker innerhalb eines Bereichs von 100% bis 150% der Fahrzeuglänge wählbar ist. Der Fahrzeuglenker kann auf diese Weise eine Projektion wählen, die ein vorgebbares (nichtganzzahliges) Vielfaches der originalen Fahrzeuggröße ist und so eine Bodenprojektion wählen, die seiner bevorzugten minimalen Parklückengröße entspricht. Die Wahl der Länge der Bodenprojektion bzw. des Abstands der besagten Abschnitte kann gestuft (z.B. in 1%- bis 10%-Schritten) oder ebenso stufenlos erfolgen.

Bevorzugt kann die Steuerungseinrichtung dazu eingerichtet sein, die Leuchtvorrichtung dergestalt anzusteuern, dass die Bodenprojektion in einen Nahbereich der Parklücke projiziert wird, der insbesondere auf Höhe der Parklücke auf der Fahrbahn neben der Parklücke liegt. Ein solcher Nahbereich liegt beispielsweise innerhalb eines Abstands von maximal 5m von der Parklücke.

Auch kann es günstig sein, wenn die Leuchtvorrichtung dazu eingerichtet ist, zusätzlich zur Bodenprojektion zumindest eine Abblendlichtverteilung zu erzeugen.

Zur zusätzlichen Unterstützung eines Einparkvorganges ist erfindungsgemäß vorgesehen, dass die Steuerungseinrichtung dazu eingerichtet ist, unter Berücksichtigung
- der Position und Orientierung des Fahrzeuges in Bezug auf die Parklücke,
- sowie von einer erfassten Lage und Abmessungen der Parklücke,
   zumindest ein Sollparkmanöver zu berechnen oder zu erfassen, und die Leuchtvorrichtung dergestalt anzusteuern, dass in Abhängigkeit von einem Vergleich
- der durch die Umgebungserfassungseinrichtung erfassten Position und Orientierung des Fahrzeuges in Bezug auf die erfasste Parklücke
- und des zumindest einen Sollparkmanövers,

Lenkinstruktionen repräsentierende Symbole auf die Fahrbahn zu projizieren. Zu diesem Zweck werden entsprechende Positionsdaten und Orientierungsdaten durch die Umgebungserfassungerfassungseinrichtung an die Steuerungsvorrichtung geliefert. Dadurch kann der Fahrzeuglenker während eines Einparkvorganges aktiv unterstützt werden. Die Lenkinstruktionen repräsentierenden Symbole können beispielsweise Pfeilsymbole umfassen.

Ergänzend dazu können zumindest zwei Bodenprojektionen in Form gerader oder gebogener Linien projiziert werden, wobei eine erste Linie die Ist-Orientierung des Fahrzeuges repräsentiert und die zweite Linie eine aus dem zumindest einen Sollparkmanöver abgeleitete Soll-Orientierung des Fahrzeuges in Bezug auf die Parklücke repräsentiert. Die zweite Linie kann dabei so vorgegeben sein, dass der Fahrzeuglenker durch Lenkmanöver, durch die die Linien in Deckung bzw. Übereinstimmung gebracht werden, einen optimalen Einparklenkeinschlag findet, wobei die beiden Linien natürlich in Abhängigkeit von der aktuellen Lage und Orientierung des Fahrzeuges veränderbar sind.

Alternativ dazu kann vorgesehen sein, dass die Steuerungseinrichtung eine Schnittstelle aufweist, über die Informationen bezüglich des aktuellen Lenkeinschlages des Fahrzeuges zuführbar sind, wobei zusätzlich zu den Lenkinstruktionen repräsentierenden Symbolen zumindest zwei Bodenprojektionen in Form gerader oder gebogener Linien projiziert werden, wobei die Steuerungseinrichtung dazu eingerichtet ist, die Linien dergestalt zu projizieren, dass eine erste Linie den Ist-Lenkeinschlag des Fahrzeuges repräsentiert und die zweite Linie einen aus dem zumindest einen Sollparkmanöver abgeleiteten Soll-Lenkeinschlag des Fahrzeuges in Bezug auf die Parklücke repräsentiert. Dadurch kann der Lenker besonders schnell einen optimalen Lenkeinschlag finden und beibehalten.

Insbesondere kann vorgesehen sein, dass die Umgebungserfassungseinrichtung dazu eingerichtet ist, die Abmessungen der Parklücke zu erfassen und mit den Fahrzeugabmessungen zur Überprüfung der Möglichkeit des Einparkens zu vergleichen, wobei die Umgebungserfassungseinrichtung zur Zufuhr des Ergebnisses des Vergleiches mit der Steuerungseinrichtung verbunden ist, wobei die Steuerungseinrichtung dazu eingerichtet ist, das Ergebnis des Vergleiches zu berücksichtigen und ausschließlich im Falle eines positiven Prüfungsergebnisses die Leuchtvorrichtung zur Projektion zumindest einer die Fahrzeuglänge repräsentierenden Bodenprojektion anzusteuern. Dadurch kann auf einfache Weise sichergestellt werden, dass nur Bodenprojektionen zu Parklücken erfolgen, die ausreichend groß sind, um das Fahrzeug aufzunehmen. Die Umgebungserfassungseinrichtung muss übrigens nicht einstückig ausgeführt sein, sondern kann ebenso aus einzelnen miteinander verbundenen Bauteilen bestehen. Typischerweise kann die Umgebungserfassungseinrichtung optische Sensoren, insbesondere eine Kamera, Ultraschallsensoren oder beliebige andere dem Fachmann bekannte Sensoren zur Umgebungserfassung, sowie beispielsweise eine Recheneinheit zur Verarbeitung sowie zur Weitergabe der erfassten Informationen enthalten.

Allgemein gilt, dass die Umgebungserfassungseinrichtung nicht dazu eingerichtet sein muss, die gesamte Fahrzeugumgebung zu erfassen. Durch den Einbau in einem Fahrzeugscheinwerfer ist dies praktisch in vielen Fällen nicht möglich, da das Sichtfeld der Umgebungserfassungseinrichtung in diesem Fall weniger als 360° umfasst. Allerdings ist die Umgebungserfassungseinrichtung zumindest dazu eingerichtet, eine vor dem Fahrzeug liegende Parklücke zu erfassen.

Vorteilhafterweise kann vorgesehen sein, dass die Steuerungseinrichtung eine Schnittstelle zur Zufuhr von zusätzlichen Umgebungsdaten aufweist, die nicht durch die Umgebungserfassungseinrichtung erfasst wurden, wobei die Steuerungseinrichtung dazu eingerichtet ist, diese zusätzlichen Umgebungsdaten bei einer Festlegung der Bodenprojektion laufend zu berücksichtigen. Damit ist es möglich, zusätzliche Umgebungsdaten, die beispielsweise durch Parksensoren, Abstandssensoren, externe Kameras oder andere externe Umgebungserfassungseinrichtungen erfasst werden, bei der Auswahl der Bodenprojektion zu berücksichtigen und auf diese Weise auch laufend Informationen über hinter dem Fahrzeug liegende Hindernisse bei der Festlegung der Bodenprojektion zu berücksichtigen. So kann die Bodenprojektion, insbesondere Fahranweisungen an den Fahrzeuglenker, unter Berücksichtigung der Informationen der externen Umgebungserfassungseinrichtungen laufend aktualisiert werden. Ergänzend oder alternativ dazu ist es auch möglich, dass der Fahrzeugscheinwerfer bzw. seine Komponenten dazu eingerichtet sind, Rückschlüsse auf einen hinter einem Fahrzeug liegenden Bereich, insbesondere eine Parklücke zu ziehen, wenn diese bereits durch die Umgebungserfassungseinrichtung beispielsweise während des Vorbeifahrens an diesem Bereich erfasst wurde. Die die Parklücke betreffenden Umgebungsinformationen könnten in einem Speicher abgelegt werden, wobei die Fortbewegung des Fahrzeuges in Bezug auf die Parklücke durch die Umgebungserfassungseinrichtung (hierzu könnten auch Beschleunigungssensoren ergänzend eingesetzt werden) erfasst wird, wodurch laufend die Lage des Fahrzeugs in Bezug auf die Parklücke bestimmt werden kann - die Parklücke als solche daher nicht zwingend ständig erfasst werden muss.

Alternativ oder ergänzend dazu kann vorgesehen sein, dass die Leuchtvorrichtung zur Projektion unterschiedlicher Lichtverteilungen zumindest eine Laserlichtquelle mit einem der Laserlichtquelle nachgeordneten Lichtkonversionselement zur Wandlung des Laserlichtes in sichtbares Licht umfasst, wobei das durch die Laserlichtquelle abgestrahlte Licht auf zumindest eine Lichtumlenkeinheit gelenkt ist, wobei die Lichtumlenkeinheit dazu eingerichtet ist, das von der Laserlichtquelle abgestrahlte Licht dergestalt in unterschiedliche vorgebbare Richtungen auf das Lichtkonversionselement zu lenken, dass voneinander unterschiedliche Lichtverteilungen erzeugbar sind. Die Lichtumlenkeinheit umfasst erfindungsgemäß zu diesem

Zweck zumindest einen um eine oder zwei Achsen schwenkbaren Mikrospiegel, beispielsweise in Form eines MEMS (microelectromechanical system), umfassen. Eine Variante einer solchen Leuchtvorrichtung ist beispielsweise aus der AT 513909 A1 bekannt geworden. Eine Leuchtvorrichtung, bei der ein Laserlichtsystem mit einem Matrix-LED-Lichtsystem kombiniert wurde, ist beispielsweise aus der AT 514 333 A4 bekannt geworden.

Des Weiteren betrifft die Erfindung ein Kraftfahrzeug mit einem erfindungsgemäßen Fahrzeugscheinwerfer.

Ein weiterer Aspekt der Erfindung betrifft ein Verfahren zur Unterstützung eines Einparkvorganges eines Fahrzeuges in eine Parklücke mittels einer Bodenprojektion durch einen Fahrzeugscheinwerfer, insbesondere einen erfindungsgemäßen Fahrzeugscheinwerfer, wobei der Fahrzeugscheinwerfer
- eine hochauflösende Leuchtvorrichtung zur Projektion unterschiedlicher Lichtverteilungen auf einen vor einem Fahrzeug liegenden Fahrbahnbereich,
- eine Umgebungserfassungseinrichtung zur Erfassung zumindest einer in der Umgebung des Fahrzeugs befindlichen Parklücke, wobei sich die Parklücke zum Zeitpunkt des Erfassens bevorzugt in der Umgebung des vor dem Fahrzeug liegenden Fahrbahnbereichs befindet, sowie
- eine Steuerungseinrichtung zur dynamischen Ansteuerung der Leuchtvorrichtung, umfasst, wobei das Verfahren folgende Schritte aufweist:
   a) Erfassen zumindest einer in der Umgebung des vor dem Fahrzeug liegenden Fahrbahnbereichs befindlichen Parklücke mittels der Umgebungserfassungseinrichtung,
   b) Ausgabe von zu einer erfassten Parklücke korrespondierenden Informationen durch die Umgebungserfassungseinrichtung an die Steuerungseinrichtung,
   c) Projizieren zumindest einer vorgebbaren, zumindest die Fahrzeuglänge repräsentierenden Bodenprojektion auf den vor dem Fahrzeug liegenden Fahrbahnbereich mittels der Leuchtvorrichtung durch entsprechendes Ansteuern der Leuchtvorrichtung durch die Steuerungseinrichtung, wobei die Steuerungseinrichtung dazu eingerichtet ist, unter Berücksichtigung
      - der Position und Orientierung des Fahrzeuges in Bezug auf die Parklücke
      - sowie von einer erfassten Lage und Abmessungen der Parklücke,zumindest ein Sollparkmanöver zu berechnen oder zu erfassen, und die Leuchtvorrichtung dergestalt anzusteuern, dass in Abhängigkeit von einem Vergleich
      - der durch die Umgebungserfassungseinrichtung erfassten Position und Orientierung des Fahrzeuges in Bezug auf die erfasste Parklücke
      - und des zumindest einen Sollparkmanövers,Lenkinstruktionen repräsentierende Symbole auf Fahrbahn projiziert werden.

Zudem kann vorgesehen sein, dass die hochauflösende Leuchtvorrichtung zusätzlich zur Projektion unterschiedlicher Lichtverteilungen auf andere in der Umgebung des Fahrzeugs liegende Fahrbahnbereiche eingerichtet ist, die nicht nur vor dem Fahrzeug liegen, oder dass zu diesem Zweck eine zusätzliche hochauflösende Leuchtvorrichtung vorgesehen ist. Beispielsweise kann eine hochauflösende Leuchtvorrichtung im Heckbereich eines Fahrzeuges vorgesehen sein, mittels der entsprechende Bodenprojektionen, wie sie im Rahmen dieses Dokuments beschrieben sind, auf einen hinter dem Fahrzeug liegenden Fahrbahnbereich projiziert werden können.

Die Erfindung ist im Folgenden anhand einer beispielhaften und nicht einschränkenden Ausführungsform näher erläutert, die in den Figuren veranschaulicht ist. Darin zeigt
Figur 1 eine schematische Darstellung eines erfindungsgemäßen Fahrzeugscheinwerfers,
Figur 2 ein erstes Beispiel einer durch einen erfindungsgemäßen Fahrzeugscheinwerfer projizierbaren Bodenprojektion nach Auffinden einer Parklücke,
Figur 3 die Bodenprojektion gemäß Fig. 2 nach Auffinden einer anderen Parklücke,
Figur 4 ein Beispiel eines nach der Situation gemäß Figur 3 folgenden Einparkvorganges, und
Figur 5 ein zweites eines nach der Situation gemäß Figur 3 folgenden Einparkvorganges.

In den folgenden Figuren bezeichnen - sofern nicht anders angegeben - gleiche Bezugszeichen gleiche Merkmale.

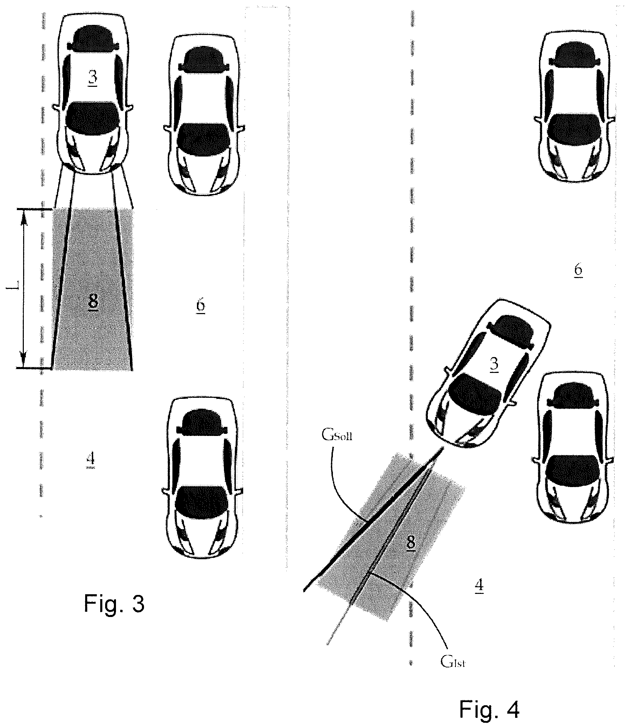

Figur 1 zeigt eine schematische Darstellung einer Ausführungsform eines erfindungsgemäßen Fahrzeugscheinwerfers 1. Der Fahrzeugscheinwerfer 1 umfasst eine hochauflösende Leuchtvorrichtung 2 zur Projektion unterschiedlicher Lichtverteilungen auf einen in der Umgebung eines Fahrzeug 3 liegenden Fahrbahnbereich 4 (siehe Fig. 2 und 3), eine Umgebungserfassungseinrichtung 5 zur Erfassung zumindest einer in der Umgebung des Fahrzeugs 3 befindlichen Parklücke 6, wobei sich die Parklücke 6 zum Zeitpunkt des Erfassens bevorzugt in der Umgebung des vor dem Fahrzeug 3 liegenden Fahrbahnbereichs 4 befindet, und eine Steuerungseinrichtung 7 zur dynamischen Ansteuerung der Leuchtvorrichtung 2. Die Umgebungserfassungseinrichtung 5 ist dazu eingerichtet, zu einer erfassten Parklücke 6 korrespondierende Informationen an die Steuerungseinrichtung 7 auszugeben. Die Steuerungseinrichtung 7 ist dazu eingerichtet, im Falle der Erfassung einer Parklücke 6 durch die Umgebungserfassungseinrichtung 5 unter Berücksichtigung zumindest der die Parklücke 6 betreffenden Informationen der Umgebungserfassungseinrichtung 5 die Leuchtvorrichtung 2 dergestalt anzusteuern, dass die Leuchtvorrichtung 2 zumindest eine vorgebbare, zumindest die Fahrzeuglänge L repräsentierende Bodenprojektion 8 auf den vor dem Fahrzeug 3 liegenden Fahrbahnbereich 4 projiziert, wie beispielsweise in Figuren 2 und 3 dargestellt ist.

Figur 2 und 3 zeigen beispielhaft den Einsatz eines bzw. zweier erfindungsgemäßer Fahrzeugscheinwerfer 1 in einem Fahrzeug 3 während einer Einparksituation. In der Situation gemäß Figur 2 ist die Parklücke 6 kleiner als die Fahrzeuglänge. Dem Fahrzeuglenker wird dieser Umstand in einfacher Weise signalisiert, indem die Länge L der Bodenprojektion 8 zumindest der der Fahrzeuglänge entspricht. Durch Vergleich der Bodenprojektion 8 mit der Parklücke 6 kann der Fahrzeuglenker auf einfache Weise feststellen, ob die Parklücke 6 ausreichend groß ist. Die in Figur 2 und 3 gezeigte Bodenprojektion 8 umfasst einen Anfangsabschnitt A1 und einen Endabschnitt A2, wobei ebenso der Bereich zwischen diesen Abschnitten aufgehellt ist, sodass die Bodenprojektion 8 in Form eines Rechteckes ausgebildet ist. Der Abstand L von dem äußeren Ende des Anfangsabschnitts A1 hin zu dem äußeren Ende des Endabschnitts A2 repräsentiert die Fahrzeuglänge.

Je nach Wunsch eines Fahrzeuglenkers kann ebenso die Länge L der Bodenprojektion vorgegeben werden. Diese kann z.B. zwischen 100% und 150% der Fahrzeuglänge betragen. Auch kann vorgesehen sein, dass die Breite des Rechteckes der Breite des Fahrzeuges 3 entspricht bzw. dass der Fahrzeugscheinwerfer 1 zur Festlegung einer entsprechenden Breite konfigurierbar ist.

In der Situation gemäß Figur 3 ist die Parklücke länger als die Fahrzeuglänge bzw. die Länge L der korrespondierenden Bodenprojektion 8. Dies wird für einen Fahrzeuglenker besonders deutlich sichtbar, indem die Steuerungseinrichtung 7 dazu eingerichtet ist, die Leuchtvorrichtung 2 dergestalt anzusteuern, dass die Bodenprojektion 8 in einen Nahbereich der Parklücke 6 projiziert wird, der insbesondere auf Höhe der Parklücke 6 auf der Fahrbahn 4 neben der Parklücke 6 liegt.

Figur 4 zeigt ein Beispiel eines der Situation gemäß Figur 3 folgenden Einparkvorganges. Vorzugsweise kann die Steuerungseinrichtung 7 dazu eingerichtet sein, unter Berücksichtigung
- der Position und Orientierung des Fahrzeuges 3 in Bezug auf die Parklücke 6
- sowie von einer erfassten Lage und Abmessungen der Parklücke 6,
   zumindest ein Sollparkmanöver zu berechnen oder zu erfassen, und die Leuchtvorrichtung 2 dergestalt anzusteuern, dass in Abhängigkeit von einem Vergleich
- der durch die Umgebungserfassungseinrichtung 5 erfassten Position und Orientierung des Fahrzeuges 3 in Bezug auf die erfasste Parklücke 6
- und des zumindest einen Sollparkmanövers,

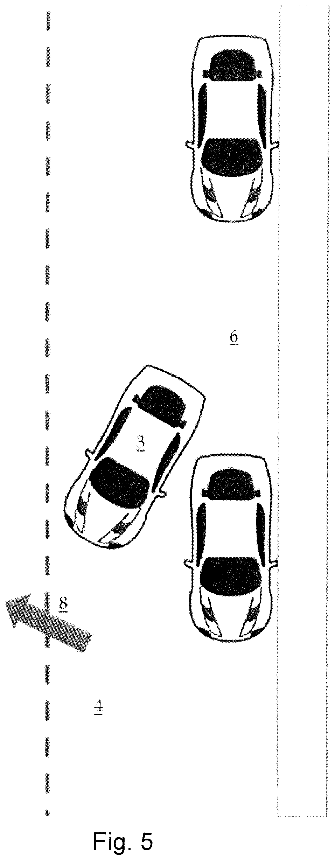

Lenkinstruktionen repräsentierende Symbole auf Fahrbahn projiziert werden. Figur 5 zeigt hierbei ein Beispiel, indem durch ein Pfeilsymbol der durch dem Fahrzeuglenker zu wählende Lenkeinschlag signalisiert wird. Alternativ oder ergänzend dazu können die Bodenprojektionen 8 ebenso zwei Bodenprojektionen in Form gerader Linien umfassen, wobei eine erste Linie G_{Ist} die Ist-Orientierung des Fahrzeuges 3 repräsentiert und die zweite Linie G_{Soll} eine aus dem zumindest einen Sollparkmanöver abgeleitete Soll-Orientierung des Fahrzeuges 3 in Bezug auf die Parklücke 6 repräsentiert. Insbesondere kann es günstig sein, wenn die Steuerungseinrichtung 7 eine Schnittstelle aufweist, über die Informationen bezüglich des aktuellen Lenkeinschlages des Fahrzeuges 3 zuführbar sind, wobei die Symbole zumindest zwei Bodenprojektionen in Form gerader oder gebogener Linien umfassen (die Linien können insbesondere als Kreisbogenabschnitte ausgebildet sein, wobei der Kreisbogenradius in Abhängigkeit von dem Lenkradeinschlag bestimmt sein kann), wobei die Steuerungseinrichtung 7 dazu eingerichtet ist, die Linien, z.B. G_{Soll} und Gᵢₛₜ, dergestalt zu projizieren, dass eine erste Linie den Ist-Lenkeinschlag des Fahrzeuges 3 repräsentiert und die zweite Linie einen aus dem zumindest einen Sollparkmanöver abgeleiteten Soll-Lenkeinschlag des Fahrzeuges 3 in Bezug auf die Parklücke 6 repräsentiert.

Des Weiteren betrifft die Erfindung ein Verfahren zur Unterstützung eines Einparkvorganges eines Fahrzeuges 3 in eine Parklücke 6 mittels einer Bodenprojektion 8 durch einen erfindungsgemäßen Fahrzeugscheinwerfer 1, wobei das Verfahren folgende Schritte aufweist:
a) Erfassen zumindest einer in der Umgebung des vor dem Fahrzeug 3 liegenden Fahrbahnbereichs 4 befindlichen Parklücke 6 mittels der Umgebungserfassungseinrichtung 5,
b) Ausgabe von zu einer erfassten Parklücke 6 korrespondierenden Informationen durch die Umgebungserfassungseinrichtung 5 an die Steuerungseinrichtung 7, und
c) Projizieren zumindest einer vorgebbaren, zumindest die Fahrzeuglänge repräsentierenden Bodenprojektion 8 auf den vor dem Fahrzeug 3 liegenden Fahrbahnbereich 4 mittels der Leuchtvorrichtung 2 durch entsprechendes Ansteuern der Leuchtvorrichtung 2 durch die Steuerungseinrichtung 7.

Wie bereits erwähnt, ist es durch die Erfindung möglich, den Fahrzeuglenker auf effektive Weise bei der Durchführung eines Einparkmanövers zu unterstützen, wobei die Aufmerksamkeit des Fahrzeuglenkers weiterhin auf die Fahrbahn gerichtet werden kann. Zudem kann diese Funktionalität durch einen erfindungsgemäßen Fahrzeugscheinwerfer 1 besonders robust und kompakt umgesetzt werden. In den Beispielen gemäß Figuren 2 bis 5 umfasst das Fahrzeug 3 zwei erfindungsgemäße Fahrzeugscheinwerfer 1. Grundsätzlich sind beliebige Kombinationen von Fahrzeugscheinwerfern denkbar. So können z.B. zwei erfindungsgemäße Fahrzeugscheinwerfer 1 einzeln oder gemeinsam die gewünschten Bodenprojektionen erzeugen. Auch können die Fahrzeugscheinwerfer 1 zur Kommunikation miteinander eingerichtet sein, und beispielsweise jeweils erfasste Umgebungsdaten austauschen und so eine gemeinsame Bodenprojektion mittels zumindest einer der Steuerungseinrichtungen 7 bestimmen.

In Anbetracht dieser Lehre ist der Fachmann in der Lage, ohne erfinderisches Zutun zu anderen, nicht gezeigten Ausführungsformen der Erfindung zu gelangen. Die Erfindung ist daher nicht auf die gezeigte Ausführungsform beschränkt. Auch können einzelne Aspekte der Erfindung bzw. der Ausführungsform aufgegriffen und miteinander kombiniert werden. Wesentlich sind die der Erfindung zugrunde liegenden Gedanken, die durch einen Fachmann in Kenntnis dieser Beschreibung in mannigfaltiger Weise ausgeführt werden können und trotzdem als solche aufrechterhalten bleiben.

## Patentansprüche

1. Fahrzeugscheinwerfer (1), umfassend
- eine hochauflösende Leuchtvorrichtung (2) zur Projektion unterschiedlicher Lichtverteilungen auf einen vor einem Fahrzeug (3) liegenden Fahrbahnbereich (4), wobei die hochauflösende Leuchtvorrichtung (2) dazu geeignet ist, unterschiedliche Lichtverteilungen in einer Auflösung von 1°, bevorzugt weniger als 0,5°, auf eine Fahrbahn zu projizieren,
- eine Umgebungserfassungseinrichtung (5) zur Erfassung zumindest einer in der Umgebung des Fahrzeugs (3) befindlichen Parklücke (6), und
- eine Steuerungseinrichtung (7) zur dynamischen Ansteuerung der Leuchtvorrichtung (2),
wobei die Umgebungserfassungseinrichtung (5) dazu eingerichtet ist, zu einer erfassten Parklücke (6) korrespondierende Informationen an die Steuerungseinrichtung (7) auszugeben, wobei die Steuerungseinrichtung (7) dazu eingerichtet ist, im Falle der Erfassung einer Parklücke (6) durch die Umgebungserfassungseinrichtung (5) unter Berücksichtigung zumindest der die Parklücke (6) betreffenden Informationen der Umgebungserfassungseinrichtung (5) die Leuchtvorrichtung (2) dergestalt anzusteuern, dass die Leuchtvorrichtung (2) zumindest eine vorgebbare, zumindest die Fahrzeuglänge repräsentierende Bodenprojektion (8) auf den vor dem Fahrzeug (3) liegenden Fahrbahnbereich (4) projiziert, wobei die Steuerungseinrichtung (7) dazu eingerichtet ist, unter Berücksichtigung
- der Position und Orientierung des Fahrzeuges (3) in Bezug auf die Parklücke
- sowie von einer erfassten Lage und Abmessungen der Parklücke (6),
zumindest ein Sollparkmanöver zu berechnen oder zu erfassen, und die Leuchtvorrichtung (2) dergestalt anzusteuern, dass in Abhängigkeit von einem Vergleich
- der durch die Umgebungserfassungseinrichtung (5) erfassten Position und Orientierung des Fahrzeuges (3) in Bezug auf die erfasste Parklücke (6)
- und des zumindest einen Sollparkmanövers,
Lenkinstruktionen repräsentierende Symbole auf Fahrbahn projiziert werden, wobei die Leuchtvorrichtung (2) zur Projektion unterschiedlicher Lichtverteilungen zumindest eine Laserlichtquelle mit einem der Laserlichtquelle nachgeordneten Lichtkonversionselement zur Wandlung des Laserlichtes in sichtbares Licht umfasst, wobei das durch die Laserlichtquelle abgestrahlte Licht auf zumindest eine Lichtumlenkeinheit gelenkt ist, wobei die Lichtumlenkeinheit dazu eingerichtet ist, das von der Laserlichtquelle abgestrahlte Licht dergestalt in unterschiedliche vorgebbare Richtungen auf das Lichtkonversionselement zu lenken, dass voneinander unterschiedliche Lichtverteilungen erzeugbar sind, wobei die Lichtumlenkeinheit zu diesem Zweck zumindest einen um eine oder zwei Achsen schwenkbaren Mikrospiegel, beispielsweise in Form eines MEMS, umfasst.

2. Fahrzeugscheinwerfer (1) nach Anspruch 1, wobei die zumindest die Fahrzeuglänge repräsentierende Bodenprojektion (8) zumindest einen aufgehellten Anfangsabschnitt (A1) und einen aufgehellten Endabschnitt (A2) aufweist, wobei der Abstand von einem äußeren Ende des Anfangsabschnitts (A1) hin zu einem äußeren Ende des Endabschnitts (A2) die Fahrzeuglänge repräsentiert.

3. Fahrzeugscheinwerfer (1) nach Anspruch 2, wobei ebenso der Bereich zwischen Anfangsabschnitt (A1) und Endabschnitt (A2) dergestalt aufgehellt ist, dass die zumindest die Fahrzeuglänge repräsentierende Bodenprojektion (8) eine im Wesentlichen rechteckige Form aufweist, wobei die Länge des Rechteckes zwischen 100% und 150% des Fahrzeugs (3) beträgt.

4. Fahrzeugscheinwerfer (1) nach Anspruch 3, wobei die Breite des Rechteckes der Breite des Fahrzeuges (3) entspricht.

5. Fahrzeugscheinwerfer (1) nach einem der Ansprüche 2 bis 4, wobei die Steuerungseinrichtung (7) eine Schnittstelle aufweist, mittels der der Abstand von einem äußeren Ende des Anfangsabschnitts (A1) hin zu einem äußeren Ende des Endabschnitts (A2) durch den Fahrzeuglenker innerhalb eines Bereichs von 100% bis 150% der Fahrzeuglänge wählbar ist.

6. Fahrzeugscheinwerfer (1) nach einem der vorhergehenden Ansprüche, wobei die Steuerungseinrichtung (7) dazu eingerichtet ist, die Leuchtvorrichtung (2) dergestalt anzusteuern, dass die Bodenprojektion (8) in einen Nahbereich der Parklücke (6) projiziert wird, der insbesondere auf Höhe der Parklücke (6) auf der Fahrbahn neben der Parklücke (6) liegt.

7. Fahrzeugscheinwerfer (1) nach einem der vorhergehenden Ansprüche, wobei die Leuchtvorrichtung (2) dazu eingerichtet ist, zusätzlich zur Bodenprojektion (8) zumindest eine Abblendlichtverteilung zu erzeugen.

8. Fahrzeugscheinwerfer (1) nach einem der vorhergehenden Ansprüche, wobei die Lenkinstruktionen repräsentierende Symbole Pfeilsymbole umfassen.

9. Fahrzeugscheinwerfer (1) nach Anspruch 8, wobei zusätzlich zu den Lenkinstruktionen repräsentierenden Symbolen zumindest zwei Bodenprojektionen in Form gerader oder gebogener Linien projiziert werden, wobei eine erste Linie (Gᵢₛₜ) die Ist-Orientierung des Fahrzeuges (3) repräsentiert und die zweite Linie (Gₛₒₗₗ) eine aus dem zumindest einen Sollparkmanöver abgeleitete Soll-Orientierung des Fahrzeuges (3) in Bezug auf die Parklücke (6) repräsentiert.

10. Fahrzeugscheinwerfer (1) nach Anspruch 8, wobei die Steuerungseinrichtung (7) eine Schnittstelle aufweist, über die Informationen bezüglich des aktuellen Lenkeinschlages des Fahrzeuges (3) zuführbar sind, wobei zusätzlich zu den Lenkinstruktionen repräsentierenden Symbolen zumindest zwei Bodenprojektionen in Form gerader oder gebogener Linien projiziert werden, wobei die Steuerungseinrichtung (7) dazu eingerichtet ist, die Linien dergestalt zu projizieren, dass eine erste Linie den Ist-Lenkeinschlag des Fahrzeuges (3) repräsentiert und die zweite Linie einen aus dem zumindest einen Sollparkmanöver abgeleiteten Soll-Lenkeinschlag des Fahrzeuges (3) in Bezug auf die Parklücke (6) repräsentiert.

11. Fahrzeugscheinwerfer (1) nach einem der vorhergehenden Ansprüche, wobei die Umgebungserfassungseinrichtung (5) dazu eingerichtet ist, die Abmessungen der Parklücke (6) zu erfassen und mit den Fahrzeugabmessungen zur Überprüfung der Möglichkeit des Einparkens zu vergleichen, wobei die Umgebungserfassungseinrichtung (5) zur Zufuhr des Ergebnisses des Vergleiches mit der Steuerungseinrichtung (7) verbunden ist, wobei die Steuerungseinrichtung (7) dazu eingerichtet ist, ausschließlich im Falle eines positiven Prüfungsergebnisses die Leuchtvorrichtung (2) zur Projektion zumindest einer die Fahrzeuglänge repräsentierenden Bodenprojektion (8) anzusteuern.

12. Fahrzeugscheinwerfer (1) nach einem der vorhergehenden Ansprüche, wobei die Steuerungseinrichtung (7) eine Schnittstelle zur Zufuhr von zusätzlichen Umgebungsdaten aufweist, die nicht durch die Umgebungserfassungseinrichtung (5) erfasst wurden, wobei die Steuerungseinrichtung (7) dazu eingerichtet ist, diese zusätzlichen Umgebungsdaten bei einer Festlegung der Bodenprojektion (8) laufend zu berücksichtigen.

13. Kraftfahrzeug mit einem Fahrzeugscheinwerfer (1) nach einem der vorhergehenden Ansprüche.

14. Verfahren zur Unterstützung eines Einparkvorganges eines Fahrzeuges (3) in eine Parklücke (6) mittels einer Bodenprojektion (8) durch einen Fahrzeugscheinwerfernach einem der vorhergehenden Ansprüche, wobei der Fahrzeugscheinwerfer (1)
- eine hochauflösende Leuchtvorrichtung (2) zur Projektion unterschiedlicher Lichtverteilungen auf einen vor einem Fahrzeug (3) liegenden Fahrbahnbereich (4),
- eine Umgebungserfassungseinrichtung (5) zur Erfassung zumindest einer in der Umgebung des Fahrzeugs (3) befindlichen Parklücke (6), sowie
- eine Steuerungseinrichtung (7) zur dynamischen Ansteuerung der Leuchtvorrichtung (2), umfasst, wobei das Verfahren folgende Schritte aufweist:
a) Erfassen zumindest einer in der Umgebung des vor dem Fahrzeug (3) liegenden Fahrbahnbereichs befindlichen Parklücke (6) mittels der Umgebungserfassungseinrichtung (5),
b) Ausgabe von zu einer erfassten Parklücke (6) korrespondierenden Informationen durch die Umgebungserfassungseinrichtung (5) an die Steuerungseinrichtung (7), und
c) Projizieren zumindest einer vorgebbaren, zumindest die Fahrzeuglänge repräsentierenden Bodenprojektion (8) auf den vor dem Fahrzeug (3) liegenden Fahrbahnbereich (4) mittels der Leuchtvorrichtung (2) durch entsprechendes Ansteuern der Leuchtvorrichtung (2) durch die Steuerungseinrichtung (7), wobei die Steuerungseinrichtung (7) dazu eingerichtet ist, unter Berücksichtigung
- der Position und Orientierung des Fahrzeuges (3) in Bezug auf die Parklücke
- sowie von einer erfassten Lage und Abmessungen der Parklücke (6),
zumindest ein Sollparkmanöver zu berechnen oder zu erfassen, und die Leuchtvorrichtung (2) dergestalt anzusteuern, dass in Abhängigkeit von einem Vergleich
- der durch die Umgebungserfassungseinrichtung (5) erfassten Position und Orientierung des Fahrzeuges (3) in Bezug auf die erfasste Parklücke (6)
- und des zumindest einen Sollparkmanövers,
Lenkinstruktionen repräsentierende Symbole auf Fahrbahn projiziert werden.

## Claims

1. Vehicle headlamp (1), comprising
- a high-resolution lighting device (2) for projecting different light distributions onto a roadway area (4) located in front of a vehicle (3), the high-resolution lighting device (2) being suitable for projecting different light distributions onto a roadway at a resolution of 1°, preferably less than 0.5°,
- an environment detection device (5) for detecting at least one parking space (6) located in the environment of the vehicle (3), and
- a control device (7) for dynamically controlling the illuminating device (2),
the environment detection device (5) being set up to output information corresponding to a detected parking space (6) to the control device (7), the control device (7) being set up, in the case of the detection of a parking space (6) by the environment detection device (5), to actuate the lighting device (2) in such a way, taking into account at least the information of the environment detection device (5) relating to the parking space (6), characterized that the lighting device (2) projects at least one predefinable ground projection (8) representing at least the vehicle length onto the roadway area (4) located in front of the vehicle (3), wherein the control device (7) is set up, taking into account
- the position and orientation of the vehicle (3) with respect to the parking space
- and of a detected position and dimensions of the parking space (6),
at least one target parking manoeuvre, and to control the lighting device (2) in such a way that, as a function of a comparison
- of the position and orientation of the vehicle (3) detected by the environment detection device (5) in relation to the detected parking space (6)
- and the at least one desired parking maneuver,
steering instructions are projected onto the roadway, wherein the light-emitting device (2) for projecting different light distributions comprises at least one laser light source with a light conversion element arranged downstream of the laser light source for converting the laser light into visible light, wherein the light emitted by the laser light source is directed onto at least one light deflecting unit the light deflection unit being set up to deflect the light emitted by the laser light source onto the light conversion element in different predeterminable directions in such a way that light distributions which differ from one another can be produced, the light deflection unit comprising for this purpose at least one micromirror, for example in the form of a MEMS, which can be pivoted about one or two axes.

2. Vehicle headlamp (1) according to claim 1, wherein the ground projection (8) representing at least the vehicle length has at least one brightened initial section (A1) and one brightened end section (A2), wherein the distance from an outer end of the initial section (A1) towards an outer end of the end section (A2) represents the vehicle length.

3. Vehicle headlamp (1) according to claim 2, wherein also the area between the initial portion (A1) and the end portion (A2) is brightened such that the ground projection (8) representing at least the vehicle length has a substantially rectangular shape, wherein the length of the rectangle is between 100% and 150% of the vehicle (3).

4. Vehicle headlamp (1) according to claim 3, wherein the width of the rectangle corresponds to the width of the vehicle (3).

5. Vehicle headlamp (1) according to any one of claims 2 to 4, wherein the control device (7) comprises an interface by means of which the distance from an outer end of the initial section (A1) to an outer end of the final section (A2) is selectable by the vehicle driver within a range of 100% to 150% of the vehicle length.

6. Vehicle headlamp (1) according to one of the preceding claims, wherein the control device (7) is arranged to control the illuminating device (2) in such a way that the ground projection (8) is projected into a near area of the parking space (6), which in particular lies at the level of the parking space (6) on the roadway next to the parking space (6).

7. Vehicle headlamp (1) according to any one of the preceding claims, wherein the lighting device (2) is arranged to generate at least one low beam distribution in addition to the ground projection (8).

8. Vehicle headlamp (1) according to any one of the preceding claims, wherein the symbols representing steering instructions comprise arrow symbols.

9. Vehicle headlamp (1) according to claim 8, wherein, in addition to the symbols representing steering instructions, at least two ground projections in the form of straight or curved lines are projected, wherein a first line (Gᵢₛₜ) represents the actual orientation of the vehicle (3) and the second line (Gₛₒₗₗ) represents a desired orientation of the vehicle (3) with respect to the parking space (6) derived from the at least one desired parking maneuver.

10. Vehicle headlamp (1) according to claim 8, wherein the control device (7) has an interface via which information relating to the current steering angle of the vehicle (3) can be supplied, wherein at least two ground projections in the form of straight or curved lines are projected in addition to the symbols comprising steering instructions, wherein the control device (7) is set up to project the lines in such a way that a first line represents the actual steering angle of the vehicle (3) and the second line represents a desired steering angle of the vehicle (3) derived from the at least one desired parking maneuver with respect to the parking space (6).

11. Vehicle headlamp (1) according to one of the preceding claims, wherein the environment detection device (5) is arranged to detect the dimensions of the parking space (6) and to compare them with the vehicle dimensions for checking the possibility of parking, wherein the environment detection device (5) is connected to the control device (7) for supplying the result of the comparison, wherein the control device (7) is arranged to control the lighting device (2) for projecting at least one ground projection (8) representing the vehicle length exclusively in the case of a positive test result.

12. Vehicle headlamp (1) according to one of the preceding claims, wherein the control device (7) has an interface for supplying additional ambient data which have not been detected by the ambient detection device (5), wherein the control device (7) is set up to take these additional ambient data into account continuously when determining the ground projection (8).

13. Motor vehicle with a vehicle headlight (1) according to any of the preceding claims.

14. Method for assisting a parking process of a vehicle (3) into a parking space (6) by means of a ground projection (8) by a vehicle headlamp according to one of the preceding claims, wherein the vehicle headlamp (1) has
- a high-resolution lighting device (2) for projecting different light distributions onto a roadway area (4) located in front of a vehicle (3),
- an environment detection device (5) for detecting at least one parking space (6) located in the environment of the vehicle (3), and
- a control device (7) for dynamically actuating the lighting device (2), the method having the following steps:
a) Detection of at least one parking space (6) located in the vicinity of the roadway area lying in front of the vehicle (3) by means of the environment detection device (5),
b) outputting information corresponding to a detected parking space (6) by the environment detection device (5) to the control device (7), and
c) projecting at least one predeterminable ground projection (8) representing at least the vehicle length onto the roadway area (4) lying in front of the vehicle (3) by means of the illuminating device (2) by corresponding control of the illuminating device (2) by the control device (7), the control device (7) being set up, taking into consideration
- the position and orientation of the vehicle (3) with respect to the parking space
- and of a detected position and dimensions of the parking space (6),
at least one target parking manoeuvre, and to control the lighting device (2) in such a way that, as a function of a comparison
- of the position and orientation of the vehicle (3) detected by the environment detection device (5) in relation to the detected parking space (6)
- and the at least one desired parking maneuver,
symbols representing steering instructions are projected onto the road.

## Revendications

1. Projecteur de véhicule (1), comprenant
- un dispositif d'éclairage à haute résolution (2) permettant de projeter différentes distributions de lumière sur une zone de la chaussée (4) située à l'avant d'un véhicule (3), le dispositif d'éclairage à haute résolution (2) étant adapté pour projeter différentes distributions de lumière sur une chaussée avec une résolution de 1°, de préférence inférieure à 0,5°,
- un dispositif de détection de l'environnement (5) pour détecter au moins une place de stationnement (6) située dans l'environnement du véhicule (3), et
- un dispositif de contrôle (7) pour la commande dynamique du dispositif d'éclairage (2),
le dispositif de détection d'environnement (5) étant conçu pour délivrer à l'appareil de commande (7) des informations correspondant à une place de stationnement (6) détectée, l'appareil de commande (7) étant conçu, en cas de détection d'une place de stationnement (6) par le dispositif de détection d'environnement (5), pour actionner le dispositif d'éclairage (2) de telle manière, en tenant compte au moins des informations du dispositif de détection d'environnement (5) relatives à la place de stationnement (6), que le dispositif d'éclairage (2) soit actionné de telle manière que la place de stationnement (6) soit détectée par le dispositif de détection d'environnement (5), en tenant compte au moins des informations du dispositif de détection d'environnement (5) relatives à la place de stationnement (6), que le dispositif d'éclairage (2) projette sur la surface de la chaussée (4) située devant le véhicule (3) au moins une projection au sol (8) pouvant être prédéterminée, qui représente au moins la longueur du véhicule, le dispositif de commande (7) étant réglé en tenant compte
- de la position et de l'orientation du véhicule (3) par rapport à la place de stationnement
- et d'une position et des dimensions détectées de l'espace de stationnement (6),
au moins une manœuvre de stationnement cible est calculée ou détectée, et le dispositif d'éclairage (2) est commandé de telle manière que, en fonction d'une comparaison
- de la position et de l'orientation du véhicule (3) détectées par le dispositif de détection de l'environnement (5) par rapport à la place de stationnement détectée (6)
- et au moins une manœuvre de stationnement souhaitée,
des instructions de direction sont projetées sur la chaussée, le dispositif d'éclairage (2) pour la projection de différentes distributions de lumière comprenant au moins une source de lumière laser avec un élément de conversion de la lumière disposé en aval de la source de lumière laser pour convertir la lumière laser en lumière visible, la lumière émise par la source de lumière laser étant dirigée vers au moins une unité de déviation de la lumière l'unité de déviation de la lumière étant conçue pour dévier la lumière émise par la source de lumière laser sur l'élément de conversion de la lumière dans différentes directions pouvant être prédéfinies, de manière à ce que des distributions de lumière différentes les unes des autres puissent être produites, l'unité de déviation de la lumière comprenant à cet effet au moins un micro-miroir, par exemple sous la forme d'un MEMS, qui peut pivoter autour d'un ou de deux axes.

2. Projecteur de véhicule (1) selon la revendication 1, dans lequel la projection au sol (8) représentant au moins la longueur du véhicule comprend au moins une section initiale (A1) éclaircie et une section finale (A2) éclaircie, dans lequel la distance d'une extrémité extérieure de la section initiale (A1) vers une extrémité extérieure de la section finale (A2) représente la longueur du véhicule.

3. Projecteur de véhicule (1) selon la revendication 2, dans lequel également la zone entre la partie initiale (A1) et la partie finale (A2) est éclaircie de telle sorte que la projection au sol (8) représentant au moins la longueur du véhicule a une forme sensiblement rectangulaire, dans lequel la longueur du rectangle est comprise entre 100 % et 150 % du véhicule (3).

4. Projecteur de véhicule (1) selon la revendication 3, dans lequel la largeur du rectangle correspond à la largeur du véhicule (3).

5. Projecteur de véhicule (1) selon l'une quelconque des revendications 2 à 4, l'appareil de commande (7) comprenant une interface au moyen de laquelle la distance entre une extrémité extérieure de la section initiale (A1) et une extrémité extérieure de la section finale (A2) peut être sélectionnée par le conducteur du véhicule dans une plage de 100 % à 150 % de la longueur du véhicule.

6. Projecteur de véhicule (1) selon l'une des revendications précédentes, dans lequel le dispositif de commande (7) est agencé pour commander le dispositif d'éclairage (2) de telle sorte que la projection au sol (8) est projetée dans une zone proche de la place de stationnement (6), qui se trouve en particulier au niveau de la place de stationnement (6) sur la chaussée à côté de la place de stationnement (6).

7. Projecteur de véhicule (1) selon l'une des revendications précédentes, dans lequel le dispositif d'éclairage (2) est agencé pour générer au moins une distribution de feux de croisement en plus de la projection au sol (8).

8. Projecteur de véhicule (1) selon l'une quelconque des revendications précédentes, dans lequel les symboles représentant les instructions de direction comprennent des symboles fléchés.

9. Projecteur de véhicule (1) selon la revendication 8, dans lequel, en plus des symboles représentant des instructions de direction, au moins deux projections au sol sous forme de lignes droites ou courbes sont projetées, une première ligne (Gᵢₛₜ) représentant l'orientation réelle du véhicule (3) et la deuxième ligne (Gₛₒₗₗ) représentant une orientation souhaitée du véhicule (3) par rapport à la place de stationnement (6), dérivée de la au moins une manoeuvre de stationnement souhaitée.

10. Projecteur de véhicule (1) selon la revendication 8, l'appareil de commande (7) présentant une interface par laquelle des informations relatives à l'angle de braquage actuel du véhicule (3) peuvent être fournies, au moins deux projections au sol sous forme de lignes droites ou courbes étant projetées en plus des symboles comprenant des instructions de direction, dans lequel le dispositif de commande (7) est configuré pour projeter les lignes de telle sorte qu'une première ligne représente l'angle de braquage réel du véhicule (3) et la seconde ligne représente un angle de braquage souhaité du véhicule (3) dérivé de la au moins une manoeuvre de stationnement souhaitée par rapport à l'espace de stationnement (6).

11. Projecteur de véhicule (1) selon l'une des revendications précédentes, dans lequel le dispositif de détection de l'environnement (5) est agencé pour détecter les dimensions de l'espace de stationnement (6) et pour les comparer aux dimensions du véhicule afin de vérifier la possibilité de stationnement, dans lequel le dispositif de détection de l'environnement (5) est relié au dispositif de commande (7) pour fournir le résultat de la comparaison, dans lequel le dispositif de commande (7) est agencé, exclusivement en cas de résultat de vérification positif, pour commander le dispositif d'éclairage (2) afin de projeter au moins une projection au sol (8) représentant la longueur du véhicule.

12. Projecteur de véhicule (1) selon l'une des revendications précédentes, le dispositif de commande (7) présentant une interface pour la fourniture de données ambiantes supplémentaires qui n'ont pas été détectées par le dispositif de détection d'ambiance (5), le dispositif de commande (7) étant réglé pour prendre en compte en permanence ces données ambiantes supplémentaires lors de la détermination de la projection au sol (8).

13. Véhicule automobile comportant un phare (1) selon l'une des revendications précédentes.

14. Pprocédé pour assister un processus de stationnement d'un véhicule (3) dans un espace de stationnement (6) au moyen d'une projection au sol (8) par un phare de véhicule selon l'une des revendications précédentes, dans lequel le phare de véhicule (1) comprend
- un dispositif d'éclairage à haute résolution (2) permettant de projeter différentes distributions de lumière sur une zone de route (4) située à l'avant d'un véhicule (3),
- un dispositif de détection de l'environnement (5) pour détecter au moins une place de stationnement (6) située dans l'environnement du véhicule (3), et
- un dispositif de commande (7) pour actionner dynamiquement le dispositif d'éclairage (2), la méthode comportant les étapes suivantes :
a) la détection d'au moins une place de stationnement (6) située à proximité de la zone de la chaussée située devant le véhicule (3) au moyen du dispositif de détection de l'environnement (5),
b) l'envoi des informations correspondant à une place de stationnement détectée (6) par le dispositif de détection de l'environnement (5) au dispositif de contrôle (7), et
c) projection d'au moins une projection au sol (8) pouvant être prédéterminée et représentant au moins la longueur du véhicule sur la surface de la chaussée (4) située devant le véhicule (3) au moyen du dispositif d'éclairage (2) par une commande correspondante du dispositif d'éclairage (2) par le dispositif de commande (7), le dispositif de commande (7) étant conçu pour déterminer, en tenant compte de la position et de l'orientation du véhicule (3), la position du véhicule (3) sur la surface de la chaussée (4) au moyen du dispositif d'éclairage (2).
- de la position et de l'orientation du véhicule (3) par rapport à la place de stationnement
- et d'une position et des dimensions détectées de l'espace de stationnement (6),
au moins une manœuvre de stationnement cible est calculée ou détectée, et le dispositif d'éclairage (2) est commandé de telle manière que, en fonction d'une comparaison
- de la position et de l'orientation du véhicule (3) détectées par le dispositif de détection de l'environnement (5) par rapport à la place de stationnement détectée (6)
- et au moins une manœuvre de stationnement souhaitée,
des symboles représentant des instructions de conduite sont projetés sur la route.
